# EUROPÄISCHE PATENTSCHRIFT

(11) **EP 0 629 537 B1**
(45) Veröffentlichungstag und Bekanntmachung des Hinweises auf die Patenterteilung: **12.03.1997**
(21) Anmeldenummer: 94250141.2
(22) Anmeldetag: 02.06.1994
(51) Int. Cl.: B61D 19/00, B60J 5/06, E05D 15/10

(54) **Güterwagen mit einer Schwenkschiebewand**
Freight wagon with a swing out sliding door
Wagon de marchandises avec paroi basculante et coulissante

(30) Priorität: 11.06.1993 DE 4319983
(43) Veröffentlichungstag der Anmeldung: 21.12.1994
(73) Patentinhaber: INSTITUT FÜR SCHIENENFAHRZEUGE GmbH, D-12526 Berlin (DE)
(72) Erfinder: Marek, Hanko, Dr.-Ing., D-13053 Berlin (DE); Franke, Erwin, D-12587 Berlin (DE)
(74) Vertreter: Köhler, Reimund

(56) Entgegenhaltungen:
- EP-A- 0 121 086
- DE-A- 2 103 985
- DE-A- 2 849 516
- DE-B- 2 640 351
- FR-A- 2 058 784

## Beschreibung

Die Erfindung bezieht sich auf einen Güterwagen mit einer Schwenkschiebewand für, die mindestens aus zwei im geschlossenen Zustand in einer Ebene liegenden Schiebewandteilen besteht, die an ihren oberen und unteren Längsseiten Halterungen aufweist, die das Abheben aus der Geschlossenstellung und das anschließende Verschieben ermöglichen und bei der die oberen und die unteren Betätigungseinrichtungen durch ein Betätigungsgestänge miteinander verbunden sind.

Es sind Schwenkschiebewände der eingangs genannten Art bekannt, die zum Öffnen aus dem Rahmen gehoben oder gezogen und anschließend über die benachbarte geschlossene Schwenkschiebewand geschoben werden. In der DE 28 49 516 C2 wird eine Schiebewand der eingangs genannten Art beschrieben, bei der die Lagerung der Schiebewandteile im geschlossenen Zustand der Schiebewand mittels Stegen erfolgt und damit eine Entlastung der für den Schwenkvorgang vorgesehenen Schwenkhebel erreicht wird. Eine zusätzliche Sicherung gegen ungewolltes Längsverschieben der Wandteile wird mit Nocken erreicht, die im geschlossenen Zustand der Schiebewand gegen die Schwenkhebel gerichtet sind. Diese Einrichtung für die Betätigung der die Schiebewand bewegenden Teile ist von den bisher bekannten Einrichtungen vorteilhaft in den Hohlraum des Langträgers einbaubar. Die verwendeten Schwenkarme bestimmen jedoch durch den relativ großen Kreisbogen, den sie beim Umsetzen der Laufrollen durchlaufen den im Hohlraum des Langträgers benötigten Freiraum. Dieser Einrichtung sind bei Anwendung in kleineren Hohlräumen von Langträgern, wie sie sich bei der Verwendung von Hochgeschwindigkeitsdrehgestellen zwangsläufig ergeben Grenzen gesetzt. Außerdem hat diese Einrichtung den Nachteil, daß die Belastung der Schwenkarme über die gesamte Kreisbahn anhält. Eine abgesetzte Schiebewand belastet nur noch in der Senkrechten und nicht in Richtung des Dichtungsrahmens des Schiebewandwagens, was besonders bei hohen Geschwindigkeiten eine wesentliche Rolle spielt. In der Schiebewandanordnung nach DE-OS 2 103 985 ist ein Betätigungsgestänge mit Handhebel vorgeschlagen, bei dem die obere und untere Hohlwelle für die daran befestigten Hebel gegenläufig drehen. Die fest mit den Wellen verbundenen Hebel wirken unmittelbar und gleichzeitig auf die Schiebewandteile , so daß für die Betätigung ein relativ großer Leistungsbedarf notwendig ist. Die obere und untere Hebeleinrichtung läßt keinen Spielraum für einen Ausgleich in der Vertikalen.

Aufgabe der Erfindung ist es, eine Schwenkschiebewand für Güterwagen zu schaffen, die einen hohen Freiheitsgrad der oberen Betätigungseinrichtung aufweist, bei der die untere Betätigungseinrichtung in den kleinen vertikalen Bauraum des Langträgers untergebracht werden kann, so daß Hochgeschwindigkeitsdrehgestelle bei Einhaltung einer Fußbodenhöhe von 1250 mm verwendet werden können und der Schließvorgang insbesondere das Herandrücken der Schwenkschiebewand an den Dichtungsrahmen des Schiebewandwagens soll ohne Federunterstützung erfolgen und mit einfachen Mitteln erreicht werden.

Die Aufgabe wird erfindungsgemäß durch die Merkmale der Patentansprüche gelöst.

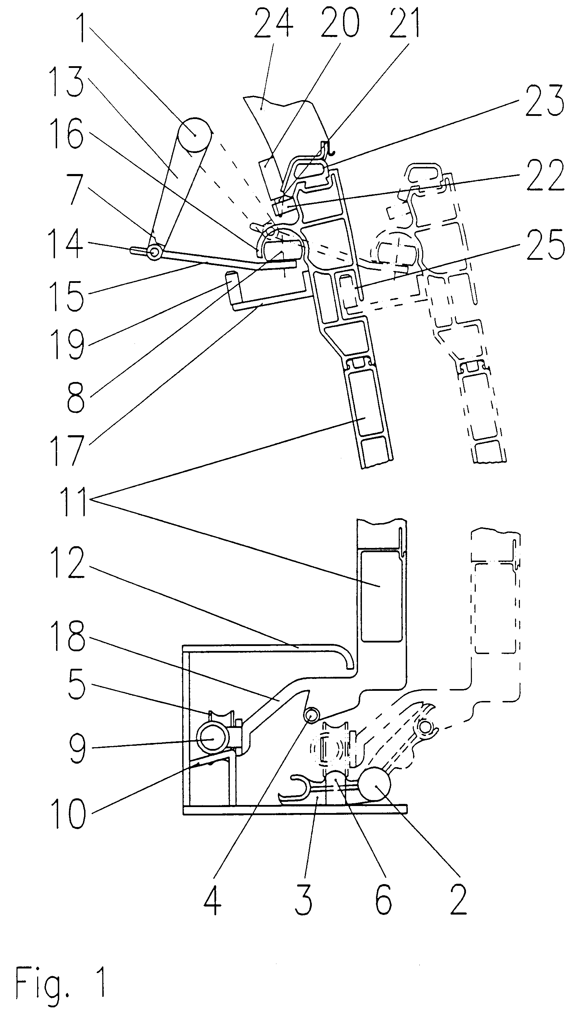

Ein Ausführungsbeispiel der Erfindung soll anhand der Zeichnung näher erläutert werden. Die Zeichnung zeigt den Schnitt durch die obere und untere Ausstelleinrichtung.

Die obere Betätigungseinrichtung besteht aus dem an der durchgehenden Betätigungswelle 1 fest angebrachten Hebel 13, der über ein Gelenk 14 mit einem Führungsarm 15 verbunden ist. Zwischen Hebel 13 und Führungsarm 15 ist ein den Ausschlagwinkel des Führungsarmes 15 und des Hebels 13 begrenzender Anschlag 7 und am Ende des Führungsarmes 15 eine Führungsrolle 8 vorgesehen, die durch eine an der Schwenkschiebewand 11 fest angebrachten Führungsschiene 16 gehalten wird . Die nach unten offene Führungsschiene 16 ist Teil des Strangpreßprofils der Schwenkschiebewand 11 und reicht über die gesamte Länge der Schwenkschiebewand 11. Unterhalb der Führungschiene 16 ist an der Schwenkschiebewand 11 ein Haltewinkel 17 mit Distanzrolle 19 fest angeordnet. Dieser Haltewinkel 17 mit der Distanzrolle 19 korrespondiert mit einem in der oberen Schwenkschiebewand 11 vorgesehenen über die gesamte Länge der Schwenkschiebewand 11 nach außen hin teils geöffneten durchgehenden Hohlraum 25. An der Innenseite des unteren Teiles des Daches 24 ist ein Riegel 20 mit Lasche 21 angeordnet, der mit einem im oberen Bereich der Schwenkschiebewand 11 innen fest angebrachtem Schloss 22 korrespondiert. Die durchgehende Betätigungswelle 1 ist mit einem in der Zeichnung nicht dargestellten Verbindungs- und Betätigungsmechanismus mit der durchgehenden Betätigungswelle 2 der unteren Betätigungseinrichtung verbunden. Eine mit der Betätigungswelle 2 fest verbundene Gabel 3 greift mit dem am Ende der Gabel 3 offenen Aufnahmeteil in den am Rollenfuß 18 vorgesehenen Zapfen 4. Am Ende des Rollenfußes 18 ist eine Laufrolle 5 angeordnet, die mit der in dem Langträger 12 aufliegenden durchgehenden Laufschiene 6 korrespondiert und am Ende des Rollenfußes 18 ist neben der Laufrolle 5 eine Stützrolle 9 vorgesehen, die mit einem in dem Langträger 12 angeordneten Bock 10 korrespondiert. Durch den in der Zeichnung nicht dargestellten Öffnungs- bzw. Schließantrieb an der Wagenstirnseite werden die obere Betätigungswelle 1 und die untere Betätigungswelle 2 gleichzeitig betätigt, wobei das Übersetzungsverhältnis der Betätigungswellen 1 und 2 so gewählt ist, das die obere Betätigungswelle 1 langsamer dreht als die untere Betätigungswelle 2.Die Verdrehrichtungen der beiden Betätigungswellen 1 und 2 sind gegenläufig.Beim Öffnen greift in der unteren Betätigungseinrichtung die Gabel 3 in den am Rollenfuß 18 angebrachten Zapfen 4 und zieht diesen zusammen mit dem Rollenfuß 18 auf einer flachen Kurvenbahn aus dem Innenraum des Langträgers 12 nach außen heraus, wobei dieser Vorgang dann beendet ist, wenn die am Rollenfuß 18 angebrachte Laufrolle 5 auf der Laufschiene 6 aufliegt. In der oberen Betätigungseinrichtung dreht der Hebel 13 den am Gelenk 14 angebrachten Führunggarm 15 nach außen, wobei die am Ende des Führungsarmes 15 angebrachte Führungrolle 8 die an der Schwenkschiebewand 11 fest angebrachte Führungsschiene 16 mit nach außen trägt und damit die Schwenkschiebewand 11 von der geschlossenen anliegenden Stellung in die Offenstellung herausdrückt. In dieser herausgedrückten Stellung greift die Distanzrolle 19 des Haltewinkels 17 in den Hohlraum 25 der benachbarten geschlossenen Schiebewand 11. Beim Verschieben der Schwenkschiebewand 11 wird die Distanzrolle 19 in dem Hohlraum 25 geführt und über den Haltewinkel 17 wird die Schwenkschiebewand 11 zur darunterliegenden mit konstantem Abstand gehalten. In der unteren Betätigungseinrichtung werden beim Öffnungsvorgang durch Verschieben der Schwenkschiebewand 11 die Zapfen 4 aus den jeweils am Ende der Schwenkschiebewand 11 angeordneten Gabeln 3 gezogen und die Schwenkschiebewand 11 kann nunmehr mit ihrer Laufrolle 5 frei auf der durchgehenden Laufschiene 6 bewegt werden. Durch die zusätzliche Anordnung des Führungsarmes 15, der die Schwenkschiebewand 11 in der Stellung "öffnen" bzw."schließen" bei der Bewegung nach außen bzw. nach innen führt, ist die Schwenkschiebewand 11 in der Vertikalen relativ frei beweglich. Damit werden die geringen vertikalen Verschiebungen, die durch den in der unteren Betätigungseinrichtung bewegten Hebel 13 verursacht werden, ausgeglichen. Beim Schließen der Schwenkschiebewand 11 bewegt die Gabel 3 den Rollenfuß 18 mit der Laufrolle 5 und mit der Stützrolle 9 in den Hohlraum des Langträgers 12, bis die Stützrolle 9 auf dem Bock 10 aufliegt. Sobald die Gabel 3 beim weiteren Verdrehen den Zapfen 4 freigibt, rollt die Stützrolle 9 auf der geneigten oberen Platte des Bockes 10 ab und die Schwenkschiebewand 11 zieht sich infolge Eigenmasse in den Dichtungsrahmen des Schiebewandwagens. Beim Schließvorgang wird der Hebel 13 in der oberen Betätigungseinrichtung soweit zurückgedreht, bis die Schwenkschiebewand 11 nahezu anliegt. Nachdem die Stützrolle 9 die Schwenkschiebewand 11 im unteren Bereich in die endgültige geschlossene Stellung gebracht hat, wird der obere Hebel 13 durch das unterschiedliche Übersetzungsverhältnis der Betätigungswellen 1 und 2 bedingt,durch das langsamere Drehen der oberen Betätigungswelle 1 erst jetzt in seine Endstellung und damit die Schwenkschiebewand 11 insgesamt in die endgültige Geschlossenstellung gebracht. In dieser Stellung wird die Schwenkschiebewand 11 gegen die Dichtungen 23 gedrückt. Ist die Schwenkschiebewand in die Schließstellung gefahren, tritt auch die Distanzrolle 19 aus dem Hohlraum 25 aus. Im geschlossenen Zustand greift die Lasche 21 des Riegels 20 in das Schloß 22 und damit wird eine zusätzliche Halterung des Daches 24 mit der Schwenkschiebewand 11 bewirkt. In dieser Geschlossenstellung sind die Gabeln 3 auf dem Unterboden des Langträgers 12 abgelegt. Dazu sind für die Gabeln 3 in der Mitte der Laufschiene 6 entsprechende Schlitze vorgesehen, während an den Enden der Laufschiene 6 entsprechende Freiräume gelassen werden. Zur Überbrückung der Schlitze in der Mitte der Laufschiene 6 sind im Mittenbereich des Schiebewandwagens starr miteinander verbundene doppelte Laufrollen 5 vorgesehen.
Mit dem zeitlich versetzten vollständigen Einzug der Schwenkschiebewand 11 in ihre endgültige Geschlossenstellung wird ein relativ kleiner Leistungsbedarf für die Betätigung erforderlich.
Die Schwenkschiebewand ist in Geschlossenstellung mit bekannten in der Zeichnung nicht dargestellten Verriegelungseinrichtungen versehen.

## Patentansprüche

1. Güterwagen mit einer Schwenkschieberwand, mit oberer und unterer Ausstelleinrichtung, die über Verbindungs- und Betätigungsmechanismen miteinander verbunden sind, wobei die obere Ausstelleinrichtung mit einem Hebel und Abstandshalter sowie mit Führungs- und Verriegelungseinrichtungen versehen ist und die untere Ausstelleinrichtung aus Rollenfuß mit Laufrolle und Abstützelementen besteht und die Laufrolle über ein Hebelsystem auf eine entlang des Wagens vorgesehene Laufschiene gehebelt wird und in Geschlossenstellung der Schwenkschiebewand der Rollenfuß mit einer Stütze auf einem im Langträger angeordneten Bock aufliegt, dadurch gekennzeichnet, daß der an der Betätigungswelle (1) fest angebrachte Hebel (13) der oberen Ausstelleinrichtung über ein Gelenk (14) mit einem Führungsarm (15) verbunden und an dessen Ende eine Führungsrolle (8) vorgesehen ist, die durch eine an der Schwenkschiebewand (11) fest angebrachten über die ganze Länge der Schwenkschiebewand (11) reichende, nach unten offene ein Teil des Strangpreßprofils der Schwenkschiebewand darstellende Führungsschiene (16) gehalten wird und daß zwischen Hebel (13) und Führungsarm (15) ein den Drehwinkel begrenzender Anschlag (7) vorgesehen ist und die untere Ausstelleinrichtung am Ende des Rollenfußes (18) neben der Laufrolle (5) eine Stützrolle (9) aufweist, die auf dem mit schräger Auflage ausgebildeten Bock (10) aufliegt und daß die an der unteren Betätigungswelle (2) fest angebrachte Gabel (3) mit dem offenen Gabelende in einen Zapfen (4) des Rollenfußes (18) greift und die Rolle (5) des Rollenfußes (18) auf die durchgehende Laufschiene (6) auflegt und dabei die Achse der Laufrolle (5) eine flache Kurvenbahn durchläuft, wobei der Zapfen (4) nur während des Abhebens vom Bock (10) und nur bis Auflage der Rolle (5) auf die Laufschiene (6) in dem Gabelende senkrechte Kräfte übertragend aufliegt.

2. Güterwagen nach Anspruch 1, dadurch gekennzeichnet, daß die Betätigungswellen (1 und 2 ) durch einen Antrieb verbunden sind, der mit einem die Betätigungswelle (1) langsamer drehendem Übersetzungsverhältnis versehen ist.

3. Güterwagen nach Anspruch 1, dadurch gekennzeichnet, daß für das Abschwenken der Gabeln (3) auf dem unterem Gurt des Außenlangträgers (12) Unterbrechungen der Laufschiene (6) vorgesehen sind.

4. Güterwagen nach Anspruch 1 und 3, dadurch gekennzeichnet, daß im Mittenbereich des Schiebewandwagens zur Überbrückung der Unterbrechungen in der Laufschiene (6) starr untereinander verbundene Laufrollen am Rollenfuß (18) der Schwenkschiebewand (11) vorgesehen sind.

## Claims

1. Freight wagon having a swinging-sliding wall provided with an upper and a lower swing-out device which are connected to one another by means of connecting and actuating mechanisms, the upper swing-out device being provided with a lever and a spacer and also with guide and locking devices and the lower swing-out device consisting of a roller foot comprising a running roller and support elements, said running roller being levered by means of a lever system onto a running rail provided along the wagon and the roller foot resting, in the closed position of the swinging-sliding wall, by a support on a rest arranged in the longitudinal beam, characterized in that the lever (13), fixed on the actuating shaft (1), of the upper swing-out device is connected by means of a joint (14) to a guide arm (15) on whose end is provided a guide roller (8) held by a guide rail (16) which is fixed on the swinging-sliding wall (11), extends over the entire length of the swinging-sliding wall (11) and is open at the bottom and which forms a part of the extruded section of the swinging-sliding wall, and in that between the lever (13) and the guide arm (15) a stop (7) limiting the turning angle is provided, and the lower swing-out device has, at the end of the roller foot (18), near the running roller (5) a support roller (9) which lies on the rest (10) which is formed with an inclined support surface, and in that the fork (3) fixed on the lower actuating shaft (2) engages by its open end a pin (4) of the roller foot (18), and the roller (5) of the roller foot (18) rests on the continuous running rail (6) and at the same time the axle of the running roller (5) passes through a flat curved path, the pin (4) lying in the fork end and transmitting vertical forces only during the lifting-off from the rest (10) and only until the roller (5) is supported on the running rail (6).

2. Freight wagon according to Claim 1, characterized in that the actuating shafts (1 and 2) are connected by a drive which has a transmission ratio turning the actuating shaft (1) at a lower speed.

3. Freight wagon according to Claim 1, characterized in that interruptions are provided in the running rail (6) in order to swivel away the forks (3) on the lower flange of the outer longitudinal beam (12).

4. Freight wagon according to Claims 1 and 3, characterized in that in the central region of the sliding-wall wagon, in order to bridge over the interruptions in the running rail (6), running rollers rigidly connected to one another are provided on the roller foot (18) of the swinging-sliding wall (11).

## Revendications

1. Wagon de marchandises avec une paroi basculante et coulissante, avec des dispositifs de déplacement supérieur et inférieur, qui sont reliés l'un à l'autre par des mécanismes de liaison et de commande, dans lequel le dispositif de déplacement supérieur est pourvu d'un levier et d'un écarteur ainsi que de dispositifs de guidage et de verrouillage et le dispositif de déplacement inférieur se compose d'un pied roulant avec un galet de roulement et des éléments d'appui et le galet de roulement est appliqué par un système de leviers sur un rail de roulement prévu le long du wagon et, en position fermée de la paroi basculante et coulissante, le pied roulant repose par un appui sur une corniche disposée dans le longeron, caractérisé en ce que le levier (13) du dispositif de déplacement supérieur fixé à l'arbre de commande (1) est relié par une articulation (14) à un bras de guidage (15) et en ce qu'il est prévu à l'extrémité de celui-ci un galet de guidage (8), qui est maintenu par un rail de guidage (16) fixé à la paroi basculante et coulissante (11), se prolongeant sur toute la longueur de la paroi basculante et coulissante (11), ouvert vers le bas, et représentant une partie du profil filé à la presse de la paroi basculante et coulissante, et en ce qu'entre le levier (13) et le bras de guidage (15) est prévue une butée (7) limitant l'angle de rotation et en ce que le dispositif de déplacement inférieur présente à l'extrémité du pied roulant (18), a côté du galet de roulement (5), un galet de support (9) qui repose sur la corniche (10) à face inclinée et en ce que la fourche (3) fixée à l'arbre de commande inférieur (2) est en prise par l'extrémité ouverte de la fourche avec un tourillon (4) du pied roulant (18) et applique le galet (5) du pied roulant (18) sur le rail de roulement continu (6) et qu'ainsi l'axe du galet de roulement (5) parcourt une courbe plate, le tourillon (4) ne reposant dans l'extrémité de la fourche en transmettant des efforts verticaux que pendant le soulèvement de la corniche (10) et seulement jusqu'à l'application du galet (5) sur le rail de roulement (6).

2. Wagon de marchandises suivant la revendication 1, caractérisé en ce que les arbres de commande (1, 2) sont reliés par un dispositif d'entraînement, qui est pourvu d'un rapport de transmission faisant tourner plus lentement l'arbre de commande (1).

3. Wagon de marchandises suivant la revendication 1, caractérisé en ce qu'il est prévu des interruptions du rail de roulement (6) pour l'abaissement des fourches (3) sur le brin inférieur du longeron extérieur (12).

4. Wagon de marchandises suivant la revendication 1 et 3, caractérisé en ce qu'il est prévu, dans la zone centrale du wagon à paroi coulissante, des galets de roulement rigidement reliés l'un à l'autre sur le pied roulant (18) de la paroi basculante et coulissante (11), pour franchir les interruptions dans le rail de roulement (6).
